# EUROPEAN PATENT APPLICATION

(11) **EP 1 860 818 A2**
(43) Date of publication of application: **28.11.2007**
(21) Application number: 07108643.3
(22) Date of filing: 22.05.2007
(51) Int. Cl.: H04L 9/32

(54) **Semiconductor device, electronic equipment and equipment authentication program**

(30) Priority: 23.05.2006 JP 2006142772; 06.10.2006 JP 2006275595
(71) Applicant: MATSUSHITA ELECTRIC INDUSTRIAL CO., LTD, Kadoma-shi, Osaka 571-8501 (JP)
(72) Inventor: Tajima, Keiichi, Osaka-shi Osaka 540-6319 (JP)
(74) Representative: Zimmer, Franz-Josef

(57) **Abstract**

A semiconductor device judges the justice of electronic equipment with authentication information of the electronic equipment to which peculiar ID information is given. The semiconductor device includes: an equipment authentication section for judging the justice of a second electronic equipment with the authentication information obtained from the second electronic equipment which is different from a first electronic equipment having the semiconductor device concerned; and a first storage section for storing authentication progress information including a result of a judgment made by the equipment authentication section. The judgment made by the equipment authentication section includes a plurality of processing. The equipment authentication section records a completion of execution of each processing and a result of judgment as authentication progress information in the first storage section.

## Description

### BACKGROUND OF THE INVENTION

### 1. Field of the Invention

The present invention relates to a semiconductor device, electronic equipment and equipment authentication program capable of easily specifying a factor of failure in the authentication.

### 2. Description of the related art

It is possible to view digital contents through the Internet or digital broadcasts. It is also possible to view digital contents through media such as CD or DVD. It is also possible to record digital contents, which have been distributed by the Internet or the digital broadcasts, on the media such as CD, DVD or HDD. The digital contents can be easily transmitted through the network with out being deteriorated. Therefore, it is necessary to provide a technique for protecting the copyright of the digital contents.

There are some standards of prescribing contents to be executed and observed by the equipment which sends and receives digital contents through the network. In these standards, in order to solve the two problems described below, the following principles (1) to (3) are stipulated in common. One problem is that there is a possibility that the digital contents, which are being transmitted, are intercepted by a third person and the other problem is that it is unknown whether or not the equipment connected is equipment to which the digital contents are to be transmitted. Concerning this matter, refer to Document 1 which is not a patent document.
(1) To authenticate that the equipment to be connected is equipment which conforms to the copyright protection standard.
(2) To encode data transmitted between the equipment.
(3) To exclude equipment, which has been recognized that it does not conform to the copyright protection standard, from the system.

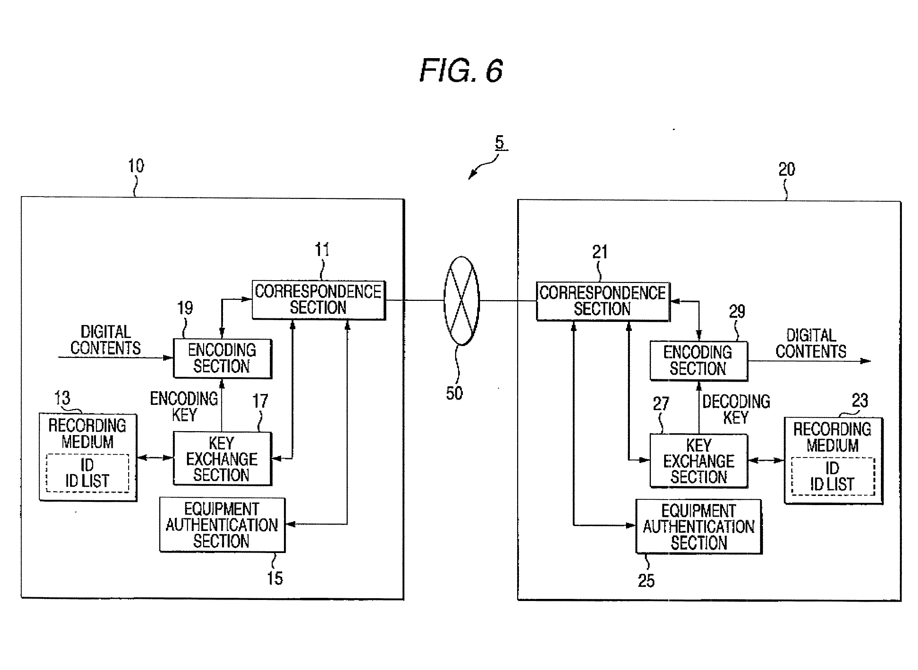

Fig. 6 is a block diagram showing a constitution of the system which conforms to the copyright protection standard. The system 5 shown in Fig. 6 includes sending equipment 10 and receiving equipment 20. The sending equipment 10 and the receiving equipment 20 are connected to each other by a network 50. Digital contents encoded by the sending equipment 10 are transmitted to the receiving equipment 20 through the network 50. The receiving equipment 20 decodes the digital contents which were encoded by the sending equipment 10.

The sending equipment 10 and the receiving equipment 20 are respectively given peculiar ID information which conforms to the copyright protection standard. The equipment to which ID information is given shows that it conforms to the copyright protection standard. However, even if the equipment is given ID information, in the case where it is recognized that the equipment is not suitable from the viewpoint of protecting the copyright for some reasons (This equipment will be referred to as illegitimate equipment, hereinafter.), according to the copyright protection standard, ID list, on which ID information of the illegitimate equipment is recorded, is open to the public, Equipment conforming to the copyright protection standard necessarily keeps one ID list. Accordingly, the sending equipment 10 and the receiving equipment 20 respectively have peculiar ID information and ID list.

As shown in Fig. 6, the sending equipment 10 includes: a correspondence section 11; a recording medium 13; an equipment authentication section 15; a key exchange section 17; and an encoding section 19. The corresponding section 11 sends and receives information between the sending equipment 10 and the receiving equipment 20 through the network 50. The recording medium 13 stores peculiar ID information and ID list given to the sending equipment 10.

The equipment authentication section 15 judges the justice of the receiving equipment 20 (Equipment authentication). In this judgment, the equipment authentication section 15 confirms that the receiving equipment 20 has peculiar ID information given to it conforming to the copyright protection standard and that ID information of the receiving equipment 20 is not contained in ID list which the sending equipment 10 stores. When these two conditions are satisfied, the equipment authentication section 15 judges that the receiving equipment 20 is right equipment which conforms to the copyright protection standard. In this connection, the equipment authentication section 15 sends ID list, which the recording medium 13 stores, to the receiving equipment 20 and receives ID list which the receiving equipment 20 stores.

The key exchange section 17 exchanges information, which is necessary for encoding and decoding the digital contents, with the receiving equipment 20 (Key exchange). To be in more detail, the key exchange section 17 receives information, which is necessary for generating an encoding key used when the digital contents are encoded, from the receiving equipment 20. The key exchange section 17 generates the encoding key according to the information obtained from the receiving equipment 20 and outputs it to the encoding section 19. Further, the key exchange section 17 sends information, which is necessary for generating a decoding key corresponding to the generated encoding key, to the receiving equipment 20.

The encoding section 19 encodes the digital contents with the encoding key outputted from the key exchange section 17.

As shown in Fig. 6, the receiving equipment 20 includes: a correspondence section 21; a recording medium 23; an equipment authentication section 25; a key exchange section 27; and a decoding section 29. The correspondence section 21 sends and receives information between the receiving equipment 20 and the sending equipment 10 through the network 50 in the same manner as that of the corresponding section 11 of the sending equipment 10. The recording medium 23 is a nonvolatile memory for storing peculiar ID information and ID list given to the receiving equipment 20 in the same manner as that of the recording medium 13 of the sending equipment 10.

The equipment authentication section 25 judges the justice of the sending equipment 10 in the same manner as that of the equipment authentication section 15 of the sending equipment 10. In this judgment, the equipment authentication section 25 confirms that the sending equipment 10 stores ID information given conforming to the copyright protection standard and that ID list, which the receiving equipment 20 stores, does not contain ID information of the sending equipment 10. When these two conditions are satisfied, the equipment authentication section 25 judges that the sending equipment 10 is right equipment which conforms to the copyright protection standard. In this connection, the equipment authentication section 25 sends ID list, which the recording medium 23 stores, to the sending equipment 10 and receives ID list which the sending equipment 10 stores.

The key exchange section 27 exchanges information, which is necessary for encoding and decoding the digital contents, with the sending equipment 10 (Key exchange). To be in more detail, the key exchange section 27 receives information which is necessary for generating an encoding key sent from the sending equipment 10. The key exchange section 27 generates a decoding key according to the information obtained from the sending equipment 10 and outputs it to the decoding section 29.

The decoding section 29 decodes the encoded digital contents with the decoding key outputted from the key exchange section 27.

Next, operation of the system 5, which conforms to the copyright protection standard, will be explained below. In the system 5, before the sending equipment 10 encodes the digital contents and sends them to the receiving equipment 20, the sending equipment 10 and the receiving equipment 20 establish a circuit through the network 50 and execute the equipment authentication and the key exchange. In the system 5 conforming to the copyright protection standard, unless the sending equipment 10 and the receiving equipment 20 normally complete the equipment authentication and the key exchange, the sending equipment 10 and the receiving equipment 20 can not encode, send, receive and decode the digital contents. Accordingly, operation of the sending equipment 10 and the receiving equipment 20 can be classified into two. One is "the equipment authentication and the key exchange" and the other is "encoding and decoding of the digital contents". "The equipment authentication and the key exchange" and "encoding and decoding of the digital contents" will be explained below in this order.

### "Equipment Authentication and Key Exchange"

The equipment authentication section 15 of the sending equipment 10 judges the justice of the receiving equipment 20. On the other hand, the equipment authentication section 25 of the receiving equipment 20 judges the justice of the sending equipment 10. Next, the key exchange section 17 of the sending equipment 10 exchanges information, which is necessary for generating an encoding key, with the receiving equipment 20 and generates the encoding key. On the other hand, the key exchange section 27 of the receiving equipment 20 exchanges information, which is necessary for generating a decoding key, with the sending equipment 10 and generates the decoding key.

### "Encoding and Decoding of Digital Contents"

After the equipment authentication and the key exchange have been normally completed, the sending equipment 10 and the receiving equipment 20 can encode the digital contents and send and receive them. In the sending equipment 10, the encoding section 19 encodes the digital contents with an encoding key, The thus encoded digital contents are sent from the correspondence section 11 to the receiving equipment 20 through the network 50. When the correspondence section 21 of the receiving equipment 20 receives the encoded digital contents, the decoding section 29 decodes the encoded digital contents with the decoding key.

An algorithm of the equipment authentication and the key exchange explained above is not open to the public so that the copyright protection standard can be strictly observed. Therefore, for example, in the case where it is necessary for an engineer who develops electronic equipment corresponding to the copyright protection standard to understand the algorithm concerned, it is usual that the engineer concerned concludes a contract of keeping the secret with the organization to manage the copyright protection standard. After that, the algorithm is disclosed to the engineer.

Next, ID list, which is stored by the recording medium 13, 23, will be explained below. The copyright protection standard previously prepares a function of automatically detect and exclude illegitimate equipment. ID list assumes this function. In this connection, when necessary, the copyright protection standard makes ID list and opens it to the public.

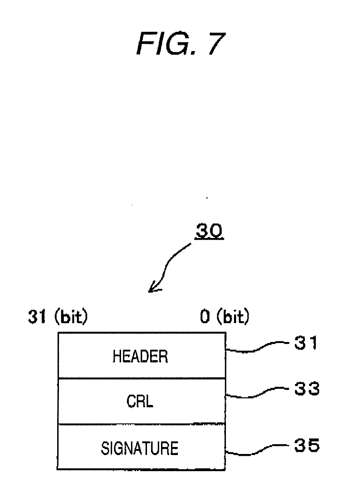

Fig. 7 is a view showing an example of the format of ID list. As shown in Fig. 7, ID list 30 includes: a header 31; CRL (Certificate Revocation List) 33; and a signature 35. The header 31 accommodates generation information of ID list 30 and version information. Version information is allotted for each issue of ID list. CRL 33 is a main content of ID list 30 and accommodates ID information of equipment which has been recognized to be illegitimate equipment by the copyright protection standard. At the time of recognizing the equipment, the equipment conforming to the copyright protection standard investigates whether or not CRL of ID list contains ID information of the equipment to be connected.

In order to prove that it is ID list formally issued by the copyright protection standard, the signature 35 accommodates data obtained when the header 31 and CRL 33 are processed. Therefore, even when ID list 30 is falsified, the equipment compares data of the signature 35 with data obtained when the header 31 and CRL 33 are processed, and when these data do not agree with each other, it is possible to detect that ID list 30 is illegitimate. This processing is referred to as an ID list signature verification. The equipment conforming to the copyright protection standard renews ID list, which has been obtained from another equipment and medium, by overwriting. This processing is referred to as an ID list renewal.

Document 1 which is not a patent document is described below.

"Protection of Contents of AV Network" written by Takashi Kokubo and Takehiko Okuyama, Published in Toshiba Review, Vol. 58, No. 6, p36 to 39

As described before, the copyright protection standard stipulates the equipment authentication. Therefore, when the equipment executes the equipment authentication, a failure in the authentication may be caused in some cases. However, in the system explained above, the equipment does not have a means for specifying a factor of causing the failure in the authentication. Only one method of finding the factor of the failure in the authentication is to analyze data which has been sent and received between the equipment during the process of the equipment authentication. This data to be sent and received between the equipment is referred to as "authentication progress information" hereinafter. However, since the algorithm of the equipment authentication is kept secret, only a person who has concluded a contract of keeping secret can know the algorithm. Therefore, only the person who has concluded the contract of keeping secret can analyze the authentication progress information. Accordingly, a person who has not concluded the contract of keeping secret can not investigate a factor of a failure of the authentication.

In the case where the person who has not concluded the contract of keeping secret wants to know the factor of the failure of the authentication, the person must ask another person who has concluded the contract of keeping the secret and is capable of analyzing the authentication progress information to analyze the factor of the failure of the authentication. There is no other way for it. At present, electronic equipment corresponding to the copyright protection standard has been actively designed and developed. However, all engineers who are in charge of development can not necessarily conclude the contract of keeping the secret. Therefore, they can not have a chance to know the algorithm. However, when LSI corresponding to the equipment authentication is utilized, the equipment corresponding to the copyright protection standard can be developed without knowing the algorithm of the equipment authentication.

### SUMMARY OF THE INVENTION

An object of the present invention is to provide a semiconductor device, electronic equipment and equipment authentication program capable of easily specifying a factor of a failure of the authentication.

The present invention provides a semiconductor device for judging the justice of electronic equipment with authentication information which is accommodated in the electronic equipment to which peculiar ID information is given, comprising an equipment authentication section which judges the justice of second electronic equipment with authentication information obtained from the second electronic equipment which is different from first electronic equipment having the semiconductor device a first storage section which stores authentication progress information including a result of judgment made by the equipment authentication section, an authentication analysis section which analyzes the result of judgment made by the equipment authentication section by referring the authentication progress information and; wherein the judgment made by the equipment authentication section includes a plurality of processing, and the equipment authentication section records a completion of execution and a result of judgment of each processing in the first storage section as the authentication progress information.

In the semiconductor device described above, in case such that authentication made by the equipment authentication section is succeed, the authentication analysis section outputs an information indicating the result of judgment, and in case such that authentication made by the equipment authentication section is failed, the authentication analysis section specifies an reason of the failure by analyzing the authentication progress information and outputs an information indicating the specified reason.

In the semiconductor device described above, the first authentication information stored in the first electronic equipment includes first ID information given to the first electronic equipment and also includes a first ID list having ID information given to electronic equipment which has been judged to be illegitimate, the second authentication information stored in the second electronic equipment includes second ID information given to the second electronic equipment and also includes a second ID list having ID information given to the electronic equipment which has been judged to be illegitimate, and the plurality of processing include: illegitimate equipment detection processing of judging whether or not the second electronic equipment is illegitimate with the second ID information included in the second authentication information obtained from the second electronic equipment and with the first ID list included in the first authentication information; and falsification detection processing of judging whether or not the second ID information included in the second authentication information is falsified.

In the semiconductor device described above, the equipment authentication section judges that the second electronic equipment is not illegitimate when the second ID information is given conforming to a predetermined standard at the time of conducting the illegitimate equipment detection processing and when the second ID information is not included in the first ID list, and the equipment authentication section judges that the second ID information is not falsified when the second ID information is given conforming to the predetermined standard at the time of conducting the falsification detection processing and when a signature of the second ID information is legitimate.

The semiconductor device described above further comprises a second storage section for storing the first authentication information.

In the semiconductor device described above, the second storage section stores the authentication progress information that the first storage section stores.

In the semiconductor device described above, the authentication progress information conforms to DTCP Standard.

In the semiconductor device described above, the first storage section stores the numbers of authentication successes every electronic equipment as an analysis result of the authentication analysis section, and the equipment authentication section judges the electronic equipment by referring to the analysis result stored in the first storage section.

The present invention provides electronic equipment to which peculiar ID information is given, comprising a semiconductor device having an equipment authentication section which judges the justice of another electronic equipment with the authentication information obtained from another electronic equipment which is different from the electronic equipment concerned, a first storage section which stores the authentication progress information including a result of judgment made by the equipment authentication section, an authentication analysis section which analyzes the result of judgment made by the equipment authentication section by referring the authentication progress information, and a second storage section which stores the authentication information accommodated in the electronic equipment concerned; and a correspondence section which corresponds with another electronic equipment through a network, wherein a judgment conducted by the equipment authentication section includes a plurality of processing, and the equipment authentication section records a completion of execution and a result of judgment of each processing in the first recording section as the authentication progress information.

The electronic equipment described above further comprises an output section of outputting the authentication progress information recorded in the first storage section.

The electronic equipment described above further comprises an output section which outputs an analysis result made by the authentication analysis section.

In the electronic equipment described above, the output section displays the authentication progress information.

In the electronic equipment described above, the output section displays the analysis result made by the authentication analysis section.

The present invention provides an equipment authentication program embodied on a computer readable medium which, when executed by a computer, cause the computer to perform operations of judging the justice of the electronic equipment with the authentication information stored in the electronic equipment to which peculiar ID information is given, wherein a computer is operated with an equipment authentication section of judging the justice of the second electronic equipment by using the authentication information obtained from another second electronic equipment different from the first electronic equipment having the computer for executing the program concerned and with a first recording section of recording the authentication progress information including a result of judgment made by the equipment authentication section in the storage section, a judgment made by the equipment authentication section includes a plurality of processing, and the first recording section records a completion of execution and a result of judgment of each processing in the storage section as the authentication progress information.

In the equipment authentication program described above, in case such that authentication made by the equipment authentication section is succeed, the authentication analysis section outputs an information indicating the result of judgment, and in case such that authentication made by the equipment authentication section is failed, the authentication analysis section specifies an reason of the failure by analyzing the authentication progress information and outputs an information indicating the specified reason.

In the equipment authentication program described above, the first authentication information stored in the first electronic equipment includes a first ID list having first ID information given to the first electronic equipment and having ID information given to the electronic equipment judged to be illegitimate, the second authentic information stored in the second electronic equipment includes a second ID list having the second ID information given to the second electronic equipment and also having ID information given to the electronic equipment judged to be illegitimate, and the plurality of processing includes: illegitimate equipment detection processing of judging whether or not the second electronic equipment is illegitimate with the second ID information included in the second authentication information obtained from the second electronic equipment and with the first ID list included in the first authentication information; and falsification detection processing of judging whether or not the second ID information included in the second authentic information is falsified.

In the equipment authentication program described above, the equipment authentication section judges that the second electronic equipment is not illegitimate when the second ID information is given conforming to a predetermined standard at the time of conducting the illegitimate equipment detection processing and when the second ID information is not included in the first ID list, and the equipment authentication section judges that the second ID information is not falsified when the second ID information is given conforming to the predetermined standard at the time of conducting the falsification detection processing and when a signature of the second ID information is legitimate.

According to the semiconductor device, electronic equipment and equipment authentication program of the present invention, it is possible to easily specify a factor of a failure in the authentication.

### BRIEF DESCRIPTION OF THE DRAWINGS

Fig. 1 is a block diagram showing a system constitution of the first embodiment.
Fig. 2 is a view showing authentication progress information of the first embodiment.
Fig. 3 is a block diagram showing a system constitution of the second embodiment.
Fig. 4 is a view showing authentication progress information of the third embodiment.
Fig. 5 is a view showing a message conforming to DTCP Standard which is sent and received between a sending equipment and a receiving equipment in the equipment authentication processing and the key exchange processing.
Fig. 6 is a block diagram showing a system constitution conforming to the copyright protection standard.
Fig. 7 is a view showing an example of the ID list format.

### DESCRIPTION OF THE PREFERED EMBODIMENTS

Referring to the drawings, an embodiment of the present invention will be explained below.

### First Embodiment

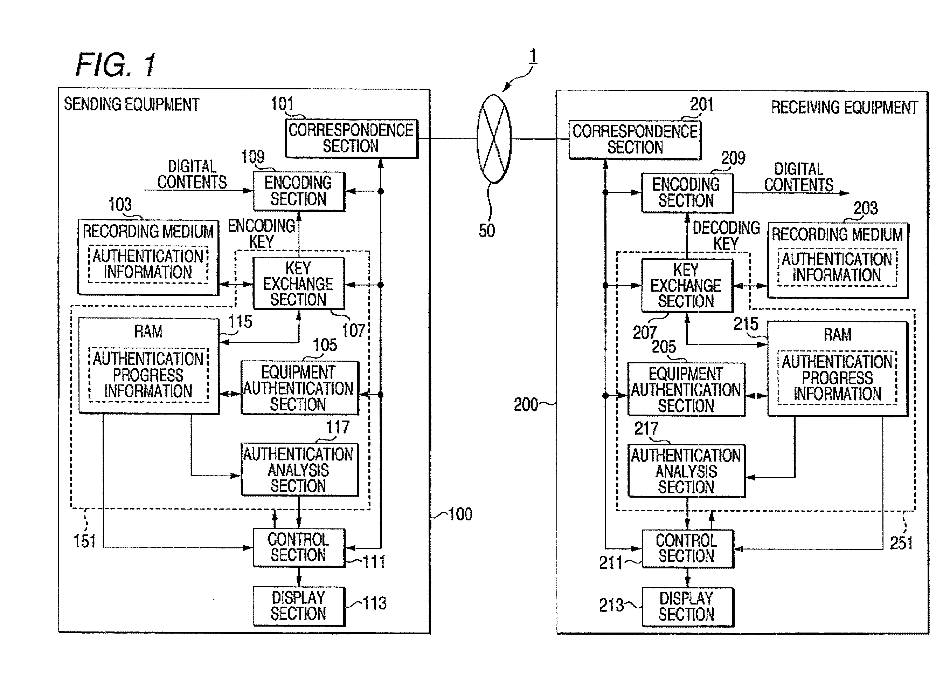

Fig. 1 is a block diagram showing the constitution of the system of the first embodiment. As shown in Fig. 1, the system 1 of the first embodiment conforming to the copyright protection standard includes: sending equipment 100; and receiving equipment 200. The sending equipment 100 and receiving equipment 200 are connected to each other by a network 50. Digital contents encoded by the sending equipment 100 are transmitted to the receiving equipment 200 through the network 50. The receiving equipment 200 decodes the digital contents that have been encoded before.

In the same manner as in the system 5 shown in Fig. 6, the sending equipment 100 and the receiving equipment 200 are respectively given peculiar ID information conforming to the copyright protection standard. Equipment given ID information shows that it conforms to the copyright protection standard. However, even if the equipment is given ID information, in the case where it is recognized that the equipment is not suitable for some reasons from the viewpoint of the copyright protection standard (This equipment will be referred to as "illegitimate equipment" hereinafter.), ID list, in which ID information of this illegitimate equipment is written, is made and open to the public according to the copyright protection standard. Equipment conforming to the copyright protection standard necessarily has one ID list. Accordingly, the sending equipment 100 and the receiving equipment 200 respectively have peculiar ID information and ID list. In this connection, both ID information and ID list are referred to as authentication information.

The constitution of the sending equipment 100 will be explained below. As shown in Fig. 1, the sending equipment 100 includes : a correspondence section 101 ; a recording medium 103 ; an equipment authentication section 105; a key exchange section 107 ; an encoding section 109; a control section 111 ; a display section 113 ; RAM 115; and an authentication analysis section 117. In this connection, the equipment authentication section 105, the key exchange section 107, the encoding section 109, RAM 115 and the authentication analysis section 117 are formed into one LSI 151. The equipment authentication section 105, the key exchange section 107 and the encoding section 109, which are included in LSI 151, are operated when a program is executed. The program concerned is stored in a recording medium 103.

The correspondence section 101 sends and receives information between the sending equipment 100 and the receiving equipment 200 through the network 50. The recording medium 103 is a nonvolatile memory for storing authentication information including peculiar ID information and ID list, which are given to the sending equipment 100. In this connection, the authentication information concerned can be renewed.

The equipment authentication section 105 judges the justice of the receiving equipment 200 (the equipment authentication processing). The equipment authentication processing includes: "illegitimate equipment detection processing"; and "falsification detection processing". In the illegitimate equipment detection processing, the equipment authentication section 105 confirms that the receiving equipment 200 has peculiar ID information given in conformity of the copyright protection standard and that ID information of the receiving equipment 200 is not included in ID list stored in the sending equipment 100. When these two conditions are satisfied, the equipment authentication section 105 judges that the receiving equipment 200 is not illegitimate equipment. In the falsification detection processing, the equipment authentication section 105 confirms that the receiving equipment 200 has peculiar ID information given in conformity of the copyright protection standard and that ID information allotted to the receiving equipment 200 is not falsified. When these two conditions are satisfied, the equipment authentication section 105 judges that ID information of the receiving equipment 200 is normal. The equipment authentication section 105 accommodates the completion of execution of these two processing and the result of judgment of each processing in RAM 115 as the authentication progress information.

Falsification of ID information is detected by utilizing a signature included in ID information. For example, the signature is information generated from a main portion (discrimination information) of ID information. The equipment authentication section 105 compares a signature included in ID information of the receiving equipment 200 with a signature generated again from the main body portion of ID information of the receiving equipment 200. When these signatures do not agree with each other, the equipment authentication section 105 judges that ID information obtained from the receiving equipment 200 is falsified.

The authentication analysis section 117 refers the authentication progress information stored in RAM 115 and analyzes the result of judgment made by the equipment authentication section 105. In case such that authentication made by the equipment authentication section 105 is succeed, the authentication analysis section 117 output an information indicating its authentication result to the control section 111. On the other hand, in case such that authentication made by the equipment authentication section 105 is failed, the authentication analysis section 117 specifies the reason of the failure by analyzing the authentication progress information and outputs an information indicating specified reason to the control section 111.

The key exchange section 107 exchanges information, which is necessary for encoding and decoding the digital contents, with the receiving equipment 200 (key exchange processing). To be in more detail, the key exchange section 107 receives information, which is necessary for generating an encoding key used when the digital contents are encoded, from the receiving equipment 200. The key exchange section 107 generates an encoding key according to information obtained from the receiving equipment 200 (encoding key generation processing) and outputs it to the encoding section 107. The key exchange section 107 sends information, which is necessary for generating a decoding key corresponding to the generated encoding key, to the receiving equipment 200. The key exchange section 107 accommodates a completion of execution of these two processing and a result of execution of each processing in RAM 115 as the authentication progress information.

The encoding section 109 encodes the digital contents with the encoding key outputted from the key exchange section 107.

RAM 115 is a nonvolatile memory for storing the authentication progress information obtained when the illegitimate equipment detection processing and the falsification detection processing, which are made by the equipment authentication section 105, and the key exchange and the encoding key generation processing, which are made by the key exchange section 107, are executed. The authentication progress information will be described in detail later.

The control section 111 controls the equipment authentication section 105, the authentication analysis section 117, the key exchange section 107, the encoding section 109 and LSI 151 including RAM 115. The control section 111 sends a control message to LSI 151 and controls operation of the equipment authentication section 105, the authentication analysis section 117, the key exchange section 107 and the encoding section 109. The control section 111 sends an authentication progress information acquisition request message to LSI 151 and acquires the authentication progress information from RAM 115. The authentication progress information acquired by the control section 111 is sent from the correspondence section 101 to the receiving equipment 200 through the network 50. The authentication progress information of the receiving equipment 200, which is transmitted from the receiving equipment 200 through the network 50, is received by the correspondence section 101 and sent to the control section 111. The control section 111 sends at least one of the authentication progress information of the sending equipment 100, which has been acquired from RAM 115, and the authentication progress information of the receiving equipment 200, which has been received by the correspondence section 101, to the display section 113. In this connection, the control section 111 may send a result of analysis of the authentication progress information to the display section 113, for example, the control section 111 may send a result of "error" or "no error" of analysis of the authentication progress information to the display section 113. Also, the control section 111 may send the information indicating the authentication result or the information indicating the reason of the authentication failure that is received from the authentication analysis section 117, to the display section 113.

The display section 113 displays the authentication progress information or the result of analysis sent from the control section 111. From the authentication progress information displayed in the display section 113, a user of the sending equipment 100 can know a present authentication state. The display section 113 is, for example, a liquid crystal panel or LED. Instead of the display conducted by the display section 113, a state of the occurrence of an error may be notified by voice.

The constitution of the receiving equipment 200 will be explained below. As shown in Fig. 1, the receiving equipment 200 includes: the correspondence section 201; the recording medium 203; the equipment authentication section 205; the authentication analysis section 217, the key exchange section 207; the decoding section 209; the control section 211; the display section 213; and RAM 215. In this connection, the equipment authentication section 205, the key exchange section 207, the decoding section 209 and RAM 215 are formed into one LSI 251. The equipment authentication section 205, the key exchange section 207 and the decoding section 209, which are included in LSI 251, are operated when a program is executed. The program concerned is accommodated in the recording medium 103.

In the same manner as that of the correspondence section 101 of the sending equipment 100, the correspondence section 201 sends and receives information between the sending equipment 100 and the receiving equipment 200 through the network 50. The recording medium 203 stores the authentication information including peculiar ID information, which has been given to the receiving equipment 200, and ID list. In this connection, the authentication information concerned can be renewed.

The equipment authentication section 205 judges the justice of the sending equipment 100 (the equipment authentication processing). The equipment authentication processing includes: "illegitimate equipment detection processing"; and "falsification detection processing". In the illegitimate equipment detection processing, the equipment authentication section 205 confirms that the sending equipment 100 has peculiar ID information given in conformity of the copyright protection standard and that ID information of the sending equipment 100 is not included in ID list stored in the receiving equipment 200. When these two conditions are satisfied, the equipment authentication section 205 judges that the sending equipment 100 is not illegitimate equipment. In the falsification detection processing, the equipment authentication section 205 confirms that the sending equipment 100 has peculiar ID information given in conformity of the copyright protection standard and that ID information allotted to the sending equipment 100 is not falsified. When these two conditions are satisfied, the equipment authentication section 205 judges that ID information of the sending equipment 100 is normal. The equipment authentication section 205 accommodates the completion of execution of these two processing and the result of judgment of each processing in RAM 215 as the authentication progress information.

Falsification of ID information is detected by utilizing the signature included in ID information. For example, the signature is information generated from a main portion (discrimination information) of ID information. The equipment authentication section 205 compares a signature included in ID information of the sending equipment 100 with a signature generated again from the main body portion of ID information of the sending equipment 100. When these signatures do not agree with each other, the equipment authentication section 205 judges that ID information obtained from the sending equipment 100 is falsified.

The authentication analysis section 217 refers the authentication progress information stored in RAM 215 and analyzes the result of judgment by the equipment authentication section 205. In case such that authentication made by the equipment authentication section 205 is succeed, the authentication analysis section 217 outputs an information indicating its authentication result to the control section 211. On the other hand, in case such that authentication made by the equipment authentication section 205 is failed, the authentication analysis section 217 specifies the reason of the failure by analyzing the authentication progress information and output an information indicating specified reason to the control section 211.

The key exchange section 207 exchanges information, which is necessary for encoding and decoding the digital contents, with the receiving equipment 200 (key exchange processing). To be in more detail, the key exchange section 207 receives information, which is necessary for generating a decoding key sent from the sending equipment 100. The key exchange section 207 generates a decoding key according to information obtained from the sending equipment 100 (decoding key generation processing) and outputs it to the decoding section 209. The key exchange section 207 accommodates the completion of execution of these two processing and the result of execution of each processing in RAM 215 as the authentication progress information.

The decoding section 209 decodes the digital contents, which are encoded, with the decoding key outputted from the key exchange section 207.

RAM 215 is a nonvolatile memory for storing the authentication progress information obtained when the illegitimate equipment detection processing and the falsification detection processing, which are made by the equipment authentication section 205, and the key exchange and the encoding key generation processing, which are made by the key exchange section 207, are executed. The authentication progress information will be described in detail later.

The control section 211 controls the equipment authentication section 205, the authentication analysis section 217, the key exchange section 207, the decoding section 209 and LSI 251 including RAM 215. The control section 211 sends a control message to LSI 251 and controls operation of the equipment authentication section 205, the authentication analysis section 217, the key exchange section 207 and the decoding section 209. The control section 211 sends an authentication progress information acquisition request message to LSI 251 and acquires the authentication progress information from RAM 215. The authentication progress information acquired by the control section 211 is sent from the correspondence section 201 to the sending equipment 100 through the network 50. The authentication progress information of the sending equipment 100, which is transmitted from the sending equipment 100 through the network 50, is received by the correspondence section 201 and sent to the control section 211. The control section 211 sends at least one of the authentication progress information of the receiving equipment 200, which has been acquired from RAM 215, and the authentication progress information of the sending equipment 100, which has been received by the correspondence section 201, to the display section 213. In this connection, the control section 111 may send a result of analysis of the authentication progress information to the display section 113, for example, the control section 111 may sends a result of "error" or "no error" of analysis of the authentication progress information to the display section 113. Also, the control section 211 may send the information indicating the authentication result or the information indicating the reason of the authentication failure that is received from the authentication analysis section 217, to the display section 213.

The display section 213 displays the authentication progress information or the result of analysis sent from the control section 211. From the authentication progress information displayed in the display section 213, a user of the receiving equipment 200 can know a present authentication state. The display section 213 is, for example, a liquid crystal panel or LED. Instead of the display conducted by the display section 213, a state of the occurrence of an error may be notified by voice.

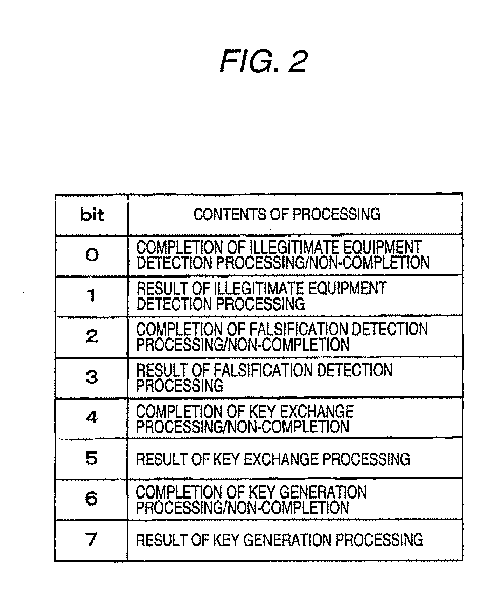

Referring to Fig. 2, the authentication progress information will be explained in detail. Fig. 2 is a view showing the authentication progress information of the first embodiment. As shown in Fig. 2, the authentication progress information of the first embodiment is composed of 8 bits including bit 0 to bit 7.

In this case, bit 0 represents completion/no-completion of the illegitimate equipment detection processing conducted by the equipment authentication section 105, 205. For example, in the case where the illegitimate equipment detection processing is not completed yet, "0" is accommodated in bit 0. In the case where the illegitimate equipment detection processing is completed, "1" is accommodated in bit 0.

In this case, bit 1 represents a result of the illegitimate equipment detection processing conducted by the equipment authentic section 105, 205. For example, in the case where it is judged that the equipment is not illegitimate, "0" is accommodated in bit 1. In the case where it is judged that the equipment is illegitimate, "1" is accommodated in bit 1.

In this case, bit 2 represents completion/no-completion of the falsification detection processing conducted by the equipment authentication section 105, 205. For example, in the case where the falsification detection processing is not completed yet, "0" is accommodated in bit 2. In the case where the falsification detection processing is completed, "1" is accommodated in bit 2.

In this case, bit 3 represents a result of the falsification detection processing conducted by the equipment authentication section 106, 205. For example, in the case where it is judged that ID information of the equipment is abnormal, "0" is accommodated in bit 3. In the case where it is judged that ID information of the equipment is normal, "1" is accommodated in bit 3.

In this case, bit 4 represents completion/no-completion of the key exchange processing conducted by the key exchange section 107, 207. For example, in the case where the key exchange processing is not completed yet, "0" is accommodated in bit 4. In the case where the key exchange processing is completed, "1" is accommodated in bit 4.

In this case, bit 5 represents a result of the key exchange conducted by the key exchange section 107, 207. For example, in the case where it is judged that the key exchange processing is abnormally completed, "0" is accommodated in bit 5. In the case where it is judged that the key exchange processing is normally completed, "1" is accommodated in bit 5.

In this case, bit 6 represents completion/no-completion of the key generation processing conducted by the key exchange section 107, 207. For example, in the case where the key generation processing is not completed yet, "0" is accommodated in bit 6. In the case where the key generation processing is completed, "1" is accommodated in bit 6.

In this case, bit 7 represents a result of the key generation processing conducted by the key exchange section 107, 207. For example, in the case where the encoding key and the decoding key can be generated by the key exchange processing, "0" is accommodated in bit 7. In the case where the encoding key and the decoding key can not be generated by the key exchange processing, "1" is accommodated in bit 7.

Next, operation of the system 1 of present embodiment, which conforms to the copyright protection standard, will be explained below. In this system 1, before the sending equipment 100 encodes digital contents and sends them to the receiving equipment 200, the sending equipment 100 and the receiving equipment 200 establish a circuit through the network 50. Then, the illegitimate equipment detection processing, the falsification detection processing, the key exchange processing and the key generation processing are conducted. In the system 1 conforming to the copyright protection standard, as long as the sending equipment 100 and the receiving equipment 200 normally complete these processing, the sending equipment 100 and the receiving equipment 200 can not encode, send, receive and decode the digital contents. Operation of the system 1 will be explained in detail as follows,

First, the sending equipment 100 and the receiving equipment 200 establish a circuit through the network 50. Next, the sending equipment 100 and the receiving equipment 200 respectively conduct the illegitimate equipment detection processing. A completion of execution and a result of judgment of the illegitimate equipment detection processing in each equipment are accommodated in the authentication progress information. The authentication progress information obtained by the sending equipment 100 is sent to the receiving equipment 200. The authentication progress information obtained by the receiving equipment 200 is sent to the sending equipment 100. Next, the sending equipment 100 and the receiving equipment 200 respectively conduct the falsification detection processing. A completion of execution and a result of judgment of the falsification detection processing in each equipment are accommodated in the authentication progress information. In this stage, in the same manner as that described before, the authentication progress information obtained in the sending equipment 100 is sent to the receiving equipment 200. In the same manner, the authentication progress information obtained in the receiving equipment 200 is sent to the sending equipment 100.

Next, the sending equipment 100 and the receiving equipment 200 respectively conduct the key exchange processing. A completion of execution and a result of execution of the key exchange processing in each equipment are accommodated in the authentication progress information. In this state, in the same manner, the authentication information obtained in the sending equipment 100 is sent to the receiving equipment 200. The authentication progress information obtained by the receiving equipment 200 is sent to the sending equipment 100. Next, the sending equipment 100 and the receiving equipment 200 respectively conduct the key generation processing. A completion of execution and a result of execution of the key generation processing in each equipment are accommodated in the authentication progress information. In this stage, in the same manner, the authentication progress information obtained in the sending equipment 100 is sent to the receiving equipment, and the authentication progress information obtained in the receiving equipment 200 is sent to the sending equipment 100,

Next, the sending equipment 100 encodes the digital contents with an encoding key generated by the key generation processing and the thus encoded digital contents are sent to the receiving equipment 200 through the network 50. The receiving equipment 200 receives the encoded digital contents. The receiving equipment 200 decodes the encoded digital contents with a decoding key generated by the key generation processing.

As explained above, according to the system 1 of the present embodiment, the authentication progress information is displayed in the display section 113, 213. Therefore, a user can know the present state of authentication while taking steps of authentication. The authentication progress information includes a completion/no-completion of execution and a judgment/a result of execution of each processing including the illegitimate equipment detection processing, the falsification detection processing, the key exchange processing and the key generation processing. Therefore, in the case of a failure in the authentication, it is possible to specify a stage in which the failure has been made. That is, it is possible to specify a factor of the failure of the authentication. In the stage of developing the system 1, even if the developer does not know an algorithm of the equipment authentication stipulated by the copyright protection standard, it is possible to specify a factor of the failure of the authentication. Accordingly, the efficiency of development can be enhanced.

In the first embodiment, the recording media 103, 203 are arranged outside LSI 151, 251. However, the recording media 103, 203 may be arranged inside LSI 151, 251. Since programs for operating the equipment authentication sections 105, 205, the key exchange portions 107, 207, the encoding section 109 and the decoding section 209 are accommodated in the recording media 103, 203, when the recording media 103, 203 are arranged inside LSI 151, 251, the programs can be hidden in LSI 151, 251. Therefore, it becomes possible to prevent the programs from being stolen or falsified, that is, the safety can be enhanced.

On the contrary, the recording media 103, 203 may be connected to the sending equipment 100 and the receiving equipment 200 from the outside.

### Second Embodiment

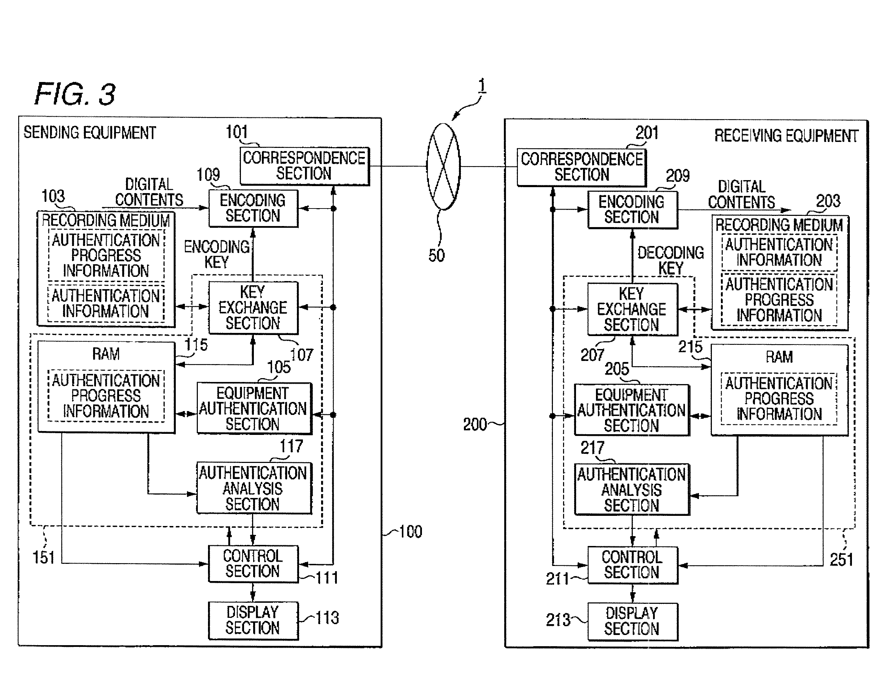

Fig. 3 is a block diagram showing a system of the second embodiment. The system 2 of the second embodiment is different from the system 1 of the first embodiment as follows. In the sending equipment 100, the authentication progress information stored in RAM 115 is also stored in the recording medium 103. In the receiving medium 200, the authentication progress information stored in RAM 215 is also stored in the recording medium 203. Further, the control sections 111, 211 can read out the authentication progress information from the recording media 103, 203. Except for the above points, the system 2 of the second embodiment is the same as the system 1 of the first embodiment. Like reference marks are used to indicate like components in Figs. 1 and 3.

As explained in the first embodiment, RAM 115, 215 are non-volatile memories. Therefore, when the sending equipment 100 or the receiving equipment 200 is reset, the authentication progress information recorded in RAM 115, 215 disappears. However, in the system 2 of the second embodiment, the authentication progress information recorded in RAM 115, 215 is copied in the recording media 103, 203 at any time. The authentication progress information recorded in the recording media 103, 203 is mainly used as history information.

When a user of the system 2 of the present embodiment refers to the authentication progress information, which is recorded in the recording media 103, 203 so that it can be used as history information as described above, it is possible for the user to know how many times the equipment authentication processing and the key exchange processing were conducted with respect to desired ID information and to know whether the processing succeeded or failed. Unless the equipment authentication processing is renewed, there is a low possibility that the next equipment authentication processing fails between one equipment, in which the equipment authentication processing succeeded, and another equipment, in which the equipment authentication processing also succeeded. For example, between one equipment, in which the equipment authentication processing succeeded ten times in the past, and another equipment, in which the equipment authentication processing also succeeded ten times in the past, there is a very low possibility that the equipment authentication processing fails after that. In this case, when it is set in such a manner that the equipment authentication processing is not conducted between both the equipment after that, it is possible to shorten a period of time needed for sending the digital contents. As a result, usability of the system can be enhanced.

Since the authentication progress information includes information related to a renewal of the authentication information, the control sections 111, 219 calculate a period of time that has passed from the latest renewal of the authentication information. If a message is displayed in the display section 113, 213 when a predetermined period of time has passed from the latest renewal of the authentication information, it is possible to call a user's attention to a renewal of the authentication information. As a result, there is a high possibility that a renewal of the authentication information is made at least periodically. Accordingly, it becomes possible to provide a system, the safety of which is high.

In this connection, the recording media 103, 203 for recording the authentication progress information may be provided in LSI 151, 251 in the same manner as that of the first embodiment. In this case, the control sections 111, 211 send an authentication progress acquisition request message to LSI 151, 251 and acquire the authentication progress information from RAM 115, 215 or the recording media 103, 203.

### Third Embodiment

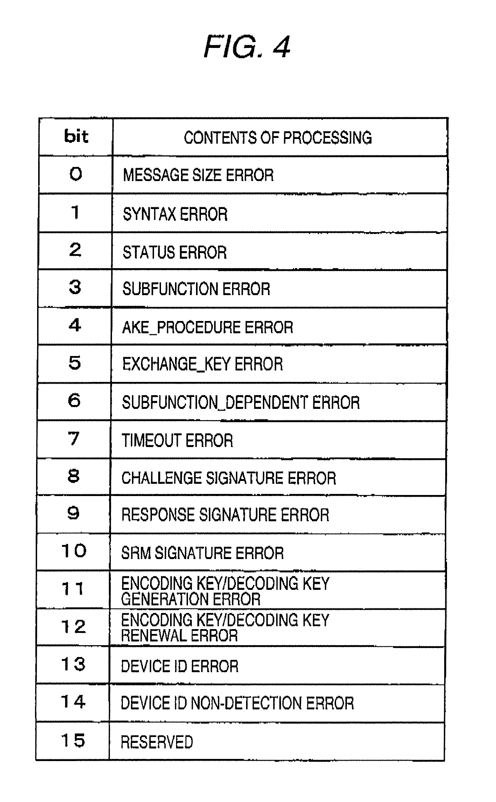

A different point of the system of the third embodiment from the system 1 of the first embodiment is authentication progress information. As the copyright protection standard, the standard of DTCP (Digital Transmission Content Protection) is employed. Referring to Fig. 4, the authentication progress information of the third embodiment will be explained in detail below. Fig. 4 is a view showing the authentication progress information of the third embodiment. As shown in Fig. 4, the authentication progress information of the third embodiment is composed of 16 bits including bit 0 to bit 15.

In this case, bit 0 represents "message size error". In the case where the correspondence section 101, 201 receives data, the message size of which exceeds a message size capable of being received by one time or in the case where data to notify the message size or a value of the register information is abnormal, "1" is accommodated into bit 0, In the case except for the above, "0" is accommodated in bit 0.

In this case, bit 1 represents "syntax error". Messages to be sent and received by the processing conducted by the equipment authentication sections 105, 205 and the key exchange section 107, 207 of the sending equipment 100 and the receiving equipment 200 are date of the format stipulated by DTCP Standard. When the format of the received data and the value of the received data are analyzed, the justice of the received data is judged. When the received data is just, "0" is accommodated in bit 1. When the received data is not just, "1" is accommodated in bit 1.

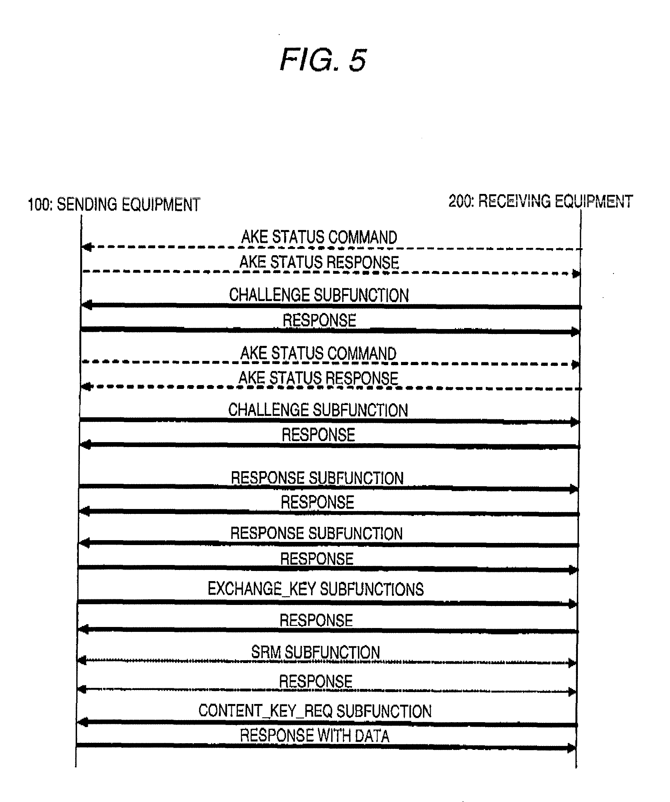

In this case, bit 2 represents "status error". According to DTCP standard, messages, which are sent and received between the sending equipment 100 and the receiving equipment 200 in the equipment authentication processing and the key exchange processing, include 6 types of "CHALLENCE", "RESPONSE", "EXCHANGE_KEY", "SRM", "AKE_CANCEL" and "CONTENT_KEY_REQ" as shown in Fig. 5. A state to judge an error for each message is defined. In the case where a state of an error is caused in the middle of the processing, "1" is accommodated in bit 2. In the case where no error state is caused, "0" is accommodated in bit 2.

In this case, bit 3 represents "subfunction error". In 6 types of messages shown in Fig. 5, the time and role, at which the messages are to be sent and received, are prescribed. For example, in the case where "RESPONSE" is sent at the time of sending "CHALLENGE", that is, in the case where each message is sent and received at the erroneous time, it is impossible to properly conduct processing. In this case, "1" is accommodated in bit 3. In other cases, "0" is accommodated in bit 3.

In this case, bit 4 represents "AKE_procedure error". DTCP Standard prescribes 4 types of equipment authentication processing including "Full authentication processing", "Restriction authentication processing", "Extended full authentication processing" and "Extended restriction authentication processing". Which authentication is used is determined by how to cope with the authentication conducted by the sending equipment 100 and the receiving equipment 200. Since the detail of each authentication is confidential, the explanation is omitted here. In the case where a message to direct a method of authentication not coping with each equipment is received, "1" is accommodated in bit 4. In the case except for the above case, "0" is accommodated in bit 4.

In this case, bit 5 represents "exchange_key error". In DTCP Standard, 4 stages of the protection level are prescribed. These 4 stages of the protection level are "Copy never (Copying is not allowed.)", "Copy once (Copying is allowed only once.)", "No more copy (Since copying has been conducted once, copying is not allowed anymore.)" and "Copy free (Copying is allowed.)". In the equipment authentication processing and the key exchange processing, the protection level of the digital contents must be fixed at one type through a series of processing. Therefore, when a message to direct a different protection level is received in the middle of processing, it is impossible to carry out the just processing. In this case, "1" is accommodated in bit 5. In the case except for the above case, "0" is accommodated in bit 5.

In this case, bit 6 represents "subfunction_dependent error". In the equipment authentication processing and the key exchange processing in DTCP Standard, in each message to be sent and received between the sending equipment 100 and the receiving equipment 200, a discrimination region is provided so that the message can be discriminated between the message sent from the sending equipment 100 to the receiving equipment 200 and the message sent from the receiving equipment 200 to the sending equipment 100. In the case where an erroneous value is set in this discrimination region, "1" is accommodated in bit 6. In the case where a just value is set in this discrimination region, "0" is accommodated in bit 6.

In this case, bit 7 represents "Timeout error". In the equipment authentication processing and the key exchange processing in DTCP Standard, in each message to be sent and received between the sending equipment 100 and the receiving equipment 200, the sending procedure, the time and the maximum waiting time are prescribed. For example, in the case where a message can not be received in the predetermined maximum waiting time due to some failure caused in correspondence, the equipment authentication processing and the key exchange processing abnormally complete as "Timeout error", In this case, "1" is accommodated in bit 7. In the case except for that, "0" is accommodated in bit 7.

In this case, bit 8 represents "CHALLENGE signature inspection error". In the equipment authentication processing and the key exchange processing in DTCP Standard, the time is provided at which "CHALLENGE subfunction" message is sent and received between the sending equipment 100 and the receiving equipment 200. At this time, the sending equipment 100 and the receiving equipment 200 investigate the justice of "CHALLENGE" message received which was sent from the opponent equipment. That is, it is inspected that "CHALLENGE" message is not falsified and that an erroneous value is not accommodated. In the case where the justice is not acknowledged as a result of the inspection, "1" is accommodated in bit 8. In the case where the justice is acknowledged as a result of the inspection, "0" is accommodated in bit 8.

In this case, bit 9 represents "RESPONSE signature inspection error". In the equipment authentication processing and the key exchange processing in DTCP Standard, the timing is provided at which "RESPONSE subfunction" message is sent and received between the sending equipment 100 and the receiving equipment 200. At this time, the sending equipment 100 and the receiving equipment 200 investigate the justice of "RESPONSE" message received which was sent from the opponent equipment. That is, it is inspected that "RESPONSE" message is not falsified and that an erroneous value is not accommodated. In the case where the justice is not acknowledged as a result of the inspection, "1" is accommodated in bit 9. In the case where the justice is acknowledged as a result of the inspection, "0" is accommodated in bit 9.

In this case, bit 10 represents "SRM signature inspection error". In the equipment authentication processing and the key exchange processing in DTCP Standard, the time is provided at which "SRM subfunction" message is sent and received between the sending equipment 100 and the receiving equipment 200. At this time, the sending equipment 100 and the receiving equipment 200 investigate the justice of "SRM" message received which was sent from the opponent equipment. That is, it is inspected that "SRM" message is not falsified and that an erroneous value is not accommodated, In the case where the justice is not acknowledged as a result of the inspection, "1" is accommodated in bit 10. In the case where the justice is acknowledged as a result of the inspection, "0" is accommodated in bit 10.

In this case, bit 11 represents "encoding key/decoding key generation error". In the key exchange processing in DTCP Standard, after key information has been sent and received between the sending equipment 100 and the receiving equipment 200, the timing is provided at which the sending equipment 100 generates an encoding key and the receiving equipment 200 generates a decoding key, In the case where the sending equipment 100 can not generate the encoding key at this time or in the case where the receiving equipment 200 can not generate the decoding key at this time, "1" is accommodated in bit 11. In the case where the sending equipment 100 can generate the encoding key at this time or in the case where the receiving equipment 200 can generate the decoding key at this time, "0" is accommodated in bit 11.

In this case, bit 12 represents "encoding key/decoding key renewal error". DTCP standard prescribes the following processing. Unless an encoding key or a decoding key, which was once generated, is not used for a predetermined period of time, a new key is generated and renewed. In the region of "encoding key/decoding key renewal error, in the case where the encoding key of the sending equipment 100 or the decoding key of the receiving equipment 200 can not be generated for some reasons, "1" is accommodated in bit 12. In the case where the encoding key of the sending equipment 100 or the decoding key of the receiving equipment 200 can be generated, "0" is accommodated in bit 12.

In this case, bit 13 represents "DEVICE ID coincidence error". The equipment authentication processing in DTCP Standard includes processing for discriminating whether or not ID information sent from the opponent equipment to each equipment coincides with the authentication information that each equipment has after ID information has been exchanged between the sending equipment 100 and the receiving equipment 200. In the case where the equipment authentication processing in DTCP Standard includes the processing, it is judged that the opponent equipment is registered to be illegitimate equipment. Therefore, it is impossible to continue the equipment authentication processing anymore, Accordingly, the processing is finished. In this case, "1" is accommodated in bit 13. In the case except for the above case, "0" is accommodated in bit 13.

In this case, bit 14 represents "DEVICE ID no-detection error". The equipment authentication processing in DTCP Standard includes processing for discriminating whether or not ID information sent from the opponent equipment to each equipment coincides with the authentication information that each equipment has after ID information has been exchanged between the sending equipment 100 and the receiving equipment 200. In the case where it was impossible to exchange ID information or in the case where it was possible to exchange ID information, however, ID information was not just, it is judged that DEVICE ID could not be detected. Therefore, it is impossible to continue the equipment authentication processing anymore. Accordingly, the processing is finished. In this case, "1" is accommodated in bit 14. In the case except for the above case, "0" is accommodated in bit 14.

In DTCP Standard, nothing is allotted to bit 15 at present.

The semiconductor device, electronic equipment and equipment authentication program of the present invention can be applied to a system for sending and receiving digital contents easily capable of specifying a factor of failure in the authentication.

## Claims

1. A semiconductor device for judging the justice of electronic equipment with authentication information which is accommodated in the electronic equipment to which peculiar ID information is given, comprising:
an equipment authentication section which judges the justice of second electronic equipment with authentication information obtained from the second electronic equipment which is different from first electronic equipment having the semiconductor device;
a first storage section which stores authentication progress information including a result of judgment made by the equipment authentication section;
an authentication analysis section which analyzes the result of judgment made by the equipment authentication section by referring the authentication progress information and;
wherein the judgment made by the equipment authentication section includes a plurality of processing, and
the equipment authentication section records a completion of execution and a result of judgment of each processing in the first storage section as the authentication progress information.

2. The semiconductor device according to claim 1, wherein:
in case such that authentication made by the equipment authentication section is succeed, the authentication analysis section outputs an information indicating the result of judgment, and
in case such that authentication made by the equipment authentication section is failed, the authentication analysis section specifies an reason of the failure by analyzing the authentication progress information and outputs an information indicating the specified reason.

3. The semiconductor device according to claim 1, wherein
the first authentication information accommodated in the first electronic equipment includes first ID information given to the first electronic equipment and also includes a first ID list having ID information given to electronic equipment which has been judged to be illegitimate,
the second authentication information accommodated in the second electronic equipment includes second ID information given to the second electronic equipment and also includes a second ID list having ID information given to the electronic equipment which has been judged to be illegitimate, and
the plurality of processing include: illegitimate equipment detection processing of judging whether or not the second electronic equipment is illegitimate with the second ID information included in the second authentication information obtained from the second electronic equipment and with the first ID list included in the first authentication information; and
falsification detection processing of judging whether or not the second ID information included in the second authentication information is falsified.

4. The semiconductor device according to claim 2, wherein
the equipment authentication section judges that the second electronic equipment is not illegitimate when the second ID information is given conforming to a predetermined standard at the time of conducting the illegitimate equipment detection processing and when the second ID information is not included in the first ID list, and
the equipment authentication section judges that the second ID information is not falsified when the second ID information is given conforming to the predetermined standard at the time of conducting the falsification detection processing and when a signature of the second ID information is legitimate.

5. The semiconductor device according to claim 1, further comprising a second storage section storing the first authentication information.

6. The semiconductor device according to claim 5, wherein the second storage section stores the authentication progress information that the first storage section stores.

7. The semiconductor device according to claim 1, wherein the authentication progress information conforms to DTCP Standard.

8. The semiconductor device according to claim 1, wherein the first storage section stores the numbers of authentication successes every electronic equipment as an analysis result of the authentication analysis section; and
the equipment authentication section judges the electronic equipment by referring to the analysis result stored in the first storage section.

9. Electronic equipment to which peculiar ID information is given, comprising:
a semiconductor device having an equipment authentication section which judges the justice of another electronic equipment with the authentication information obtained from another electronic equipment which is different from the electronic equipment concerned;
a first storage section which stores the authentication progress information including a result of judgment made by the equipment authentication section;
an authentication analysis section which analyzes the result of judgment made by the equipment authentication section by referring the authentication progress information; and
a second storage section which stores the authentication information accommodated in the electronic equipment concerned; and
a correspondence section which corresponds with another electronic equipment through a network,
wherein a judgment conducted by the equipment authentication section includes a plurality of processing, and
the equipment authentication section records a completion of execution and a result of judgment of each processing in the first recording section as the authentication progress information.

10. The Electronic equipment according to claim 9, further comprising an output section which outputs the authentication progress information recorded in the first storage section.

11. The Electronic equipment according to claim 9, further comprising an output section which outputs an analysis result made by the authentication analysis section.

12. The Electronic equipment according to claim 10, wherein the output section displays the authentication progress information.

13. The Electronic equipment according to claim 11, wherein the output section displays the analysis result made by the authentication analysis section.

14. An equipment authentication program embodied on a computer readable medium which, when executed by a computer, cause the computer to perform operations of judging the justice of the electronic equipment with the authentication information stored in the electronic equipment to which peculiar ID information is given, wherein the computer is operated with:
an equipment authentication section which judges the justice of the second electronic equipment by using the authentication information obtained from another second electronic equipment different from the first electronic equipment having the computer for executing the program concerned;
a first recording section which records the authentication progress information including a result of judgment made by the equipment authentication section in the storage section;
an authentication analysis section which analyzes the result of judgment made by the equipment authentication section by referring the authentication progress information; and
wherein a judgment made by the equipment authentication section includes a plurality of processing; and
the first recording section records a completion of execution and a result of judgment of each processing in the storage section as the authentication progress information.

15. The equipment authentication program according to claim 14, wherein:
in case such that authentication made by the equipment authentication section is succeed, the authentication analysis section output an information indicating the result of judgment, and
in case such that authentication made by the equipment authentication section is failed, the authentication analysis section specifies an reason of the failure by analyzing the authentication progress information and output an information indicating the specified reason.

16. The equipment authentication program according to claim 14, wherein
the first authentication information accommodated in the first electronic equipment includes a first ID list having first ID information given to the first electronic equipment and having ID information given to the electronic equipment judged to be illegitimate,
the second authentic information accommodated in the second electronic equipment includes a second ID list having the second ID information given to the second electronic equipment and also having ID information given to the electronic equipment that has been judged to be illegitimate, and
the plurality of processing includes: illegitimate equipment detection processing of judging whether or not the second electronic equipment is illegitimate with the second ID information included in the second authentication information obtained from the second electronic equipment and with the first ID list included in the first authentication information; and falsification detection processing of judging whether or not the second ID information included in the second authentic information is falsified.

17. The equipment authentication program according to claim 11, wherein
the equipment authentication section judges that the second electronic equipment is not illegitimate when the second ID information is given conforming to a predetermined standard at the time of conducting the illegitimate equipment detection processing and when the second ID information is not included in the first ID list, and
the equipment authentication section judges that the second ID information is not falsified when the second ID information is given conforming to the predetermined standard at the time of conducting the falsification detection processing and when a signature of the second ID information is legitimate.
